# EUROPEAN PATENT SPECIFICATION

(11) **EP 4 213 589 B1**
(45) Date of publication and mention of the grant of the patent: **18.11.2026**
(21) Application number: 21866660.0
(22) Date of filing: 03.09.2021
(51) Int. Cl.: H05B 3/10, H05B 3/56, B62D 1/06

(54) **CORD-SHAPED HEATER AND PLANAR HEATER**
SCHNURFÖRMIGES HEIZELEMENT UND PLANARES HEIZELEMENT
DISPOSITIF DE CHAUFFAGE EN FORME DE CORDON ET DISPOSITIF DE CHAUFFAGE PLAN

(30) Priority: 10.09.2020 JP 2020151813
(43) Date of publication of application: 19.07.2023
(73) Proprietor: KURABE INDUSTRIAL CO., LTD., Shizuoka 432-8521 (JP)
(72) Inventor: OBA, Motoyuki, Hamamatsu-shi, Shizuoka 432-8521 (JP); OTA, Tomoya, Hamamatsu-shi, Shizuoka 432-8521 (JP); MORI, Motohiro, Hamamatsu-shi, Shizuoka 432-8521 (JP)
(74) Representative: Winter, Brandl - Partnerschaft mbB
(86) International application number: PCT/JP2021/032381
(87) International publication number: WO 2022/054701

(56) References cited:
- WO-A1-2011/001953
- WO-A1-2011/001953
- WO-A1-2018/147707
- JP-A- 2007 134 083
- JP-A- 2008 311 111
- JP-A- 2010 015 691
- JP-A- 2011 171 254
- JP-A- H09 167 675

## Description

### TECHNICAL FIELD

The present invention relates to a cord-shaped heater and a sheet-shaped heater using the cord-shaped heater having high bending resistance and improved workability. The cord-shaped heater and the sheet-shaped heater can be suitably used for an electric blanket, an electric carpet, a car seat heater and a steering heater, for example.

### BACKGROUND ART

The cord-shaped heater is used for an electric blanket, an electric carpet, a car seat heater and the like. A generally known cord-shaped heater is formed by spirally winding a heater wire around a core wire and coating them with an outer cover made of an insulation body layer. The heater wire is formed by arraying or twisting a plurality of conductive wires such as copper wires and nickel-chromium alloy wires together. A heat-fusing member is formed around the heater wire and the heater wire is adhered to a substrate made of a nonwoven fabric, an aluminum foil and the like by the heat-fusing member (e.g., shown in Patent Document 1).

When the conductive wires are pulled or bent, a part of the conductive wires may be disconnected (broken) in some cases. Conventionally, the conductive wires of the cord-shaped heater are in contact with each other. Therefore, when a part of the conductive wires is disconnected, the diameter of the heater wire becomes thin at the disconnected portion. The amount of the current per unit area increases at the portion where the diameter of the heater wire becomes thin. Thus, there is a risk of causing abnormal heating at this portion. As another example, when the heater wire is formed by individually forming an insulating film on each of the conductive wires, a parallel circuit is formed by the conductive wires. In such a heater wire, when a part of the conductive wires is disconnected, it means that a part of the parallel circuit is disconnected. In such a heater wire, excessive generation of heat can be prevented (e.g., shown in Patent document 2 and Patent document 3).

In addition, the applicant of the present invention has also filed the applications of Patent documents 4 and 5 as the technology related to the present invention.

### PRIOR ART DOCUMENTS

### [Patent Documents]

[Patent document 1] Japanese Unexamined Patent Application Publication No. 2003-174952: KURABE INDUSTRIAL CO., LTD.
[Patent document 2] Japanese Unexamined Patent Application Publication No. S61-47087: Matsushita Electric Industrial Co., Ltd.
[Patent document 3] Japanese Unexamined Patent Application Publication No. 2008-311111: KURABE INDUSTRIAL CO., LTD.
[Patent document 4] Japanese Unexamined Patent Application Publication No. 2010-15691: KURABE INDUSTRIAL CO., LTD.
[Patent document 5] International Publication No. WO2011/001953: KURABE INDUSTRIAL CO., LTD

Further relevant prior art is found in WO 2011/001953 A1.

### DISCLOSURE OF THE INVENTION

### [Problems to be Solved by the Invention]

In Patent documents 2 and 3, a plurality of materials is disclosed as the insulating film of the conductive wires. A mainly used conductive wire is a so-called enamel wire. A material of the insulating film for the enamel wire is generally a polyurethane resin.

The polyurethane resin has low heat resistance and insufficient incombustibility. When the heat resistance and the incombustibility are required for the insulating film, hard materials such as a silicone resin and a polyimide resin are used for the material of the insulating film since they have excellent heat resistance and incombustibility. It is not easy to process a terminal of the conductive wires in which the silicone resin or the polyimide resin is used.

The silicone resin and the polyimide resin have excellent heat resistance and incombustibility. For example, when the conductive wires are connected to a lead wire by soldering, the insulating film made of the silicone resin or the polyimide resin does not melt at solder-melting temperature. Thus, the insulating film cannot be removed.

When the conductive wires are connected to the lead wire by crimping a terminal, the insulating film is not destroyed by the pressure of crimping the terminal since the silicone resin and the polyimide resin are hard. Thus, the conductive wires and the lead wire are not electrically connected to each other.

Accordingly, it is necessary to remove the insulating film made of the silicone resin or the polyimide resin in a polishing process separated from the connecting process.
However, the conductive wires used for the cord-shaped heater are extremely thin (e.g., 0.1 mm or less). When performing the polishing process, careful attention is required for preventing the disconnection. Thus, the productivity is poor.

The present invention provides a cord-shaped heater and a sheet-shaped heater using the cord-shaped heater enabling to process the terminal easily.

### [Means for Solving the Problem]

The cord-shaped heater of the present invention is a cord-shaped heater including one or a plurality of conductive wires covered with an insulating film, wherein the insulating film at least includes an inner layer formed on the conductive wires and an outer layer formed outside the inner layer, and the thermal decomposition temperature of a first material constituting the inner layer is lower than the melting temperature of a second material constituting the outer layer and lower than the thermal decomposition temperature of the second material.

In addition, the second material constituting the outer layer is a thermosetting resin.

In addition, the first material constituting the inner layer generates a reducing gas when the first material is thermally decomposed.

In addition, the first material constituting the inner layer is selected from the group consisting of a polyurethane resin and a polyester resin, and the second material constituting the outer layer is selected from the group consisting of a polyimide resin, a polyamide imide resin and a silicone resin.

In addition, a sheet-shaped heater of the present invention is formed by arranging the above described cord-shaped heater on a substrate.

Note that the thermal decomposition temperature is the temperature at which the weight reduction starts when the temperature is gradually increased. The thermal decomposition temperature is measured in accordance with JIS-K7120-1997 Testing methods of plastics by thermogravimetry (or ISO7111-1997).

### [Effects of the Invention]

In the cord-shaped heater of the present invention, the inner layer is thermally decomposed at the temperature lower than the temperature at which the outer layer melts or the outer layer is thermally decomposed. Therefore, only the inner layer thermally decomposes and disappears at the temperature equal to or higher than the thermal decomposition temperature of the inner layer and equal to or lower than the melting temperature and the thermal decomposition temperature of the outer layer. Thus, a clearance is formed between the conductive wires and the insulating film. When the outer layer is formed by extrusion or laterally winding tape, the outer layer is stretched in a length direction. When the outer layer is formed by a coating and curing process, the contraction force is generated on the outer layer when the outer layer is cured. In any cases, the residual stress exists in the outer layer in the direction of compressing the outer layer in the length direction. Therefore, when a clearance is formed between the outer layer of the insulating film and the conductive wires and the heat is applied to the outer layer, the outer layer of the insulating film is contracted. As a result, when a terminal portion of the conductive wires is heated to the above described predetermined temperature (e.g., solder-melting temperature), the insulating film is removed and the conductive wires are exposed.

### BRIEF DESCRIPTION OF THE DRAWINGS

Fig. 1 is a drawing showing an embodiment of the present invention, and is a partially cutaway side view showing a configuration of a cord-shaped heater.
Fig. 2 is a drawing showing an embodiment of the present invention, and is a partially cutaway side view showing a configuration of conductive wires on which an insulating film is formed.
Fig. 3 is a drawing showing an embodiment of the present invention, and is a drawing showing a configuration of a hot press-type heater manufacturing apparatus.
Fig. 4 is a drawing showing an embodiment of the present invention, and is a partial perspective view showing a state that the cord-shaped heater is arranged in a predetermined pattern.
Fig. 5 is a drawing showing an embodiment of the present invention, and is a plan view showing a configuration of a sheet-shaped heater.
Fig. 6 is a drawing showing another embodiment of the present invention, and is a partially cutaway side view showing a configuration of the cord-shaped heater.
Fig. 7 is a drawing showing another embodiment of the present invention, and is a partially cutaway side view showing a configuration of the cord-shaped heater.
Fig. 8 is a drawing showing another embodiment of the present invention, and is a partially cutaway side view showing a configuration of the cord-shaped heater.
Fig. 9 is a drawing showing another embodiment of the present invention, and is a partially cutaway side view showing a configuration of the cord-shaped heater.
Fig. 10 is a drawing showing another embodiment of the present invention, and is a partially cutaway side view showing a configuration of the cord-shaped heater.
Fig. 11 is a drawing showing another embodiment of the present invention, and is a partially cutaway side view showing a configuration of the cord-shaped heater.
Fig. 12 is a drawing showing an embodiment of the present invention, and is a partially cutaway perspective view showing a state that the sheet-shaped heater is embedded in a vehicle seat.
Fig. 13 is a partially cutaway perspective view showing a state that the sheet-shaped heater is embedded in a steering wheel.

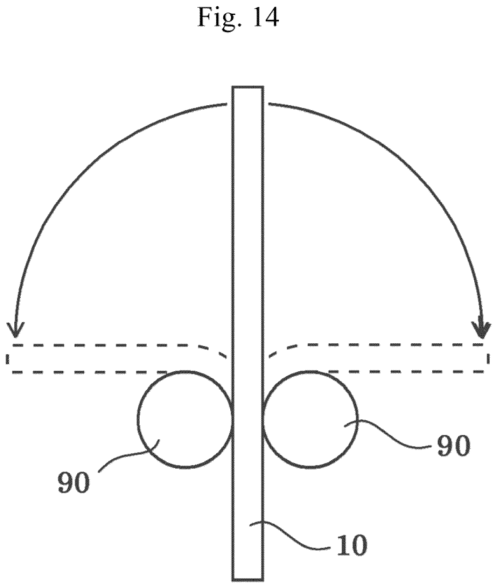

Fig. 14 is a reference drawing for explaining a method of a bending test.

### MODES FOR CARRYING OUT THE INVENTION

Hereafter, the embodiments of the present invention will be explained with reference to the drawings. In the embodiments, the present invention is used as a sheet-shaped heater and the sheet-shaped heater is assumed to be applied to a vehicle seat heater, as an example.

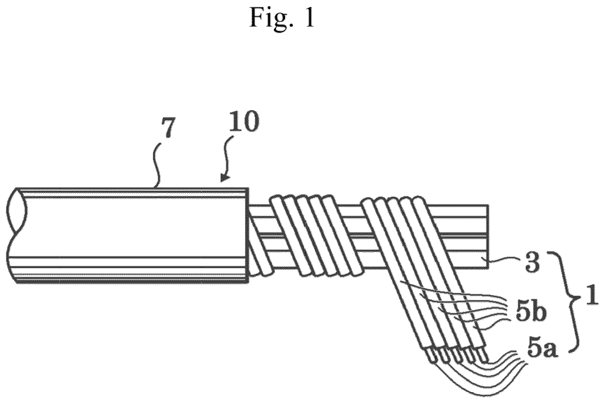

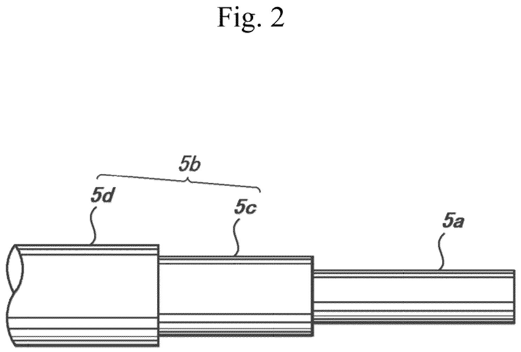

First, the present embodiment will be explained referring to Figs. 1 to 5. The configuration of a cord-shaped heater 10 in the present embodiment will be explained. The cord-shaped heater 10 of the present embodiment has the configuration shown in Fig.1. A core wire 3 is formed of an aromatic polyamide fiber bundle having an external diameter of approximately 0.2 mm. Five conductive wires 5a, which are hard copper alloy wires having a strand diameter of approximately 0.08 mm and including a tin, are spirally wound at a pitch of about 1.0 mm around an outer periphery of the core wire 3 in a state of being arrayed together. As shown in Fig. 1 and Fig. 2, an insulating film 5b is formed around each of the conductive wires 5a. The insulating film 5b is formed by an inner layer 5c made of a polyurethane resin and an outer layer 5d made of a polyamide imide resin. The inner layer 5c of the insulating film 5b is formed with a thickness of approximately 4 µm by applying a polyurethane varnish around the conductive wires 5a and drying it. Then, the outer layer 5d is formed with a thickness of approximately 4 µm by applying a polyamide imide varnish around the inner layer 5c and drying it. A heating wire 1 is formed by winding the conductive wires 5a around the core wire 3. The cord-shaped heater 10 is formed by coating an outer periphery of the heating wire 1 with an insulation body layer 7. The insulation body layer 7 is formed by extruding a polyethylene resin containing a flame retardant material around the heating wire 1 so that the heating wire 1 is covered with a thickness of 0.2 mm. In the present embodiment, the polyethylene resin of the insulation body layer 7 functions as a heat-fusing material. A finished outer diameter of the above described cord-shaped heater 10 is 0.8 mm. The core wire 3 is effective since bendability and tensile strength are increased. It is also possible that a plurality of conductive wires is arrayed together or twisted together to form the heating wire 1 without using the core wire 3.

Next, the configuration of a substrate 11 to which the above described cord-shaped heater 10 is adhered and fixed will be explained. The substrate 11 of the present embodiment is formed of a nonwoven fabric (areal density: 100 g/m², thickness: 0.6 mm). The nonwoven fabric is formed by mixing 10% of a heat-fusing fiber having a core-sheath structure and 90% of a flame retardant fiber that is formed of a flame retardant polyester fiber. In the core-sheath structure of the heat-fusing fiber, a low-melting polyester is used as a sheath component. The substrate 11 is formed in a desired shape by a conventionally known method such as die cutting.

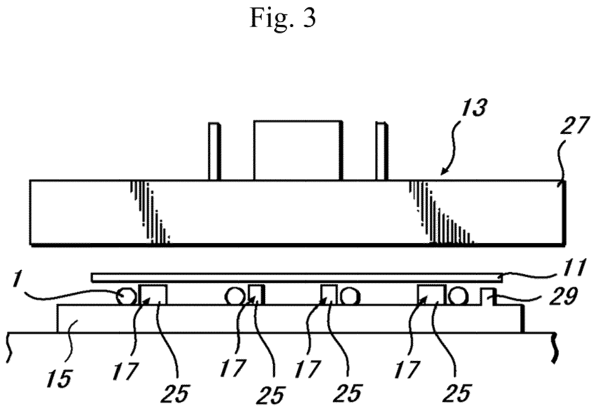

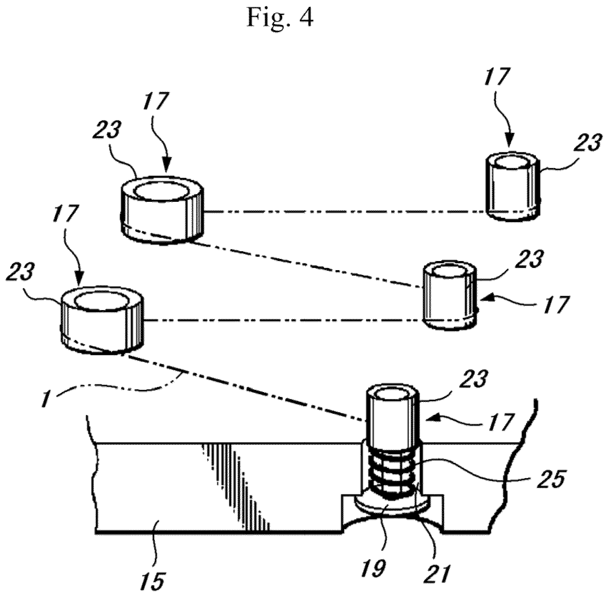

Next, the configuration of arranging the cord-shaped heater 10 on the substrate 11 in a predetermined pattern shape and bonding and fixing them with each other will be explained. Fig. 3 is a drawing showing the configuration of a hot press-type heater manufacturing apparatus 13 for adhering and fixing the cord-shaped heater 10 to the substrate 11. First, a hot pressing jig 15 will be explained. A plurality of locking mechanisms 17 is arranged on an upper surface of the hot pressing jig 15. As shown in Fig. 4, the locking mechanisms 17 have pins 19. The pins 19 are inserted upward from below into holes 21 bored on the hot pressing jig 15. Locking members 23 are mounted on an upper surface of the pins 19 movably in an axial direction. The locking members 23 are always biased upward by coil springs 25. As shown by a virtual line in Fig. 4, the cord-shaped heater 10 is arranged in a predetermined pattern shape corresponding to the positions of the locking members 23 while the cord-shaped heater 10 is locked to the locking members 23 formed on the upper surface of the plurality of locking mechanisms 17.

As shown in Fig. 3, a press hot plate 27 is arranged above the plurality of locking mechanisms 17 so as to be raised and lowered. First, the cord-shaped heater 10 is arranged in a predetermined pattern shape by hooking the cord-shaped heater 10 on a plurality of locking members 23 of the locking mechanisms 17. Then, the substrate 11 is placed on the cord-shaped heater 10. In that state, the press hot plate 27 is lowered so that the substrate 11 is pressed on the cord-shaped heater 10. At this time, the press hot plate 27 performs the heating and pressing on the substrate 11 and the cord-shaped heater 10 at 230°C for five seconds, for example. Thus, the heat-fusing material of the cord-shaped heater 10 and the heat-fusing fiber of the substrate 11 fused together by being. Consequently, the cord-shaped heater 10 and the substrate 11 are heated and pressed so as to be adhered and fixed to each other. When the cord-shaped heater 10 and the substrate 11 are heated and pressed, the press hot plate 27 moves downward against the energizing force of the coil springs 25 of the locking members 23 of the locking mechanisms 17.

An adhesive layer can be formed or a double-sided adhesive tape can be attached to the surface of the substrate 11 on which the cord-shaped heater 10 is not arranged. The adhesive layer or the double-sided adhesive tape is used for fixing a sheet-shaped heater 31 to the vehicle seat.

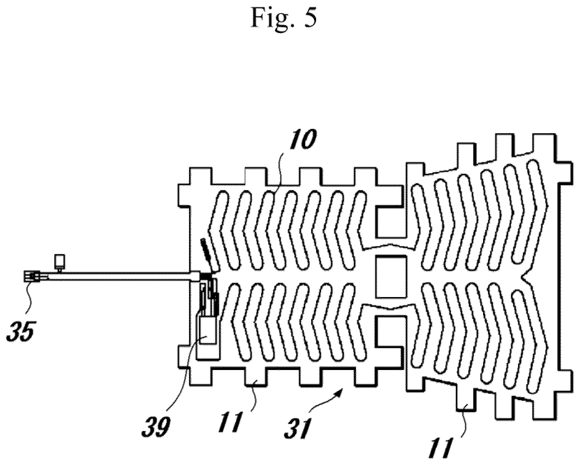

By the above described procedures, the sheet-shaped heater 31 of the vehicle seat heater shown in Fig. 5 can be obtained. Lead wires are connected to both ends of the cord-shaped heater 10 in the sheet-shaped heater 31 and a temperature controller 39 via connection terminals (not illustrated). The cord-shaped heater 10, the temperature controller 39 and a connector 35 are connected to each other by the lead wires . The connection between the cord-shaped heater 10 and the lead wires by the connection terminals will be described in detail. At an end portion of the cord-shaped heater 10, the heating wire 1 is exposed by removing the insulation body layer 7 of the heating wire 1 using a strip working machine. At an end portion of each of the lead wires , the conductive wires are exposed by removing an insulation body of the lead wires using the strip working machine. The end portion of the cord-shaped heater 10 at which the heating wire 1 is exposed and the end portion of the lead wires at which the conductive body is exposed are connected to the connection terminals by soldering. Consequently, the cord-shaped heater 10, the lead wires and the connection terminals are connected to each other. The insulating film 5b formed on the conductive wires 5a of the cord-shaped heater 10 is removed by the heat of the soldering. Thus, the conductive wires 5a and the conductive body of the lead wire are electrically connected. This operation mechanism will be specifically explained below.

The temperature of the soldering is approximately 360°C. The above described temperature is higher than the thermal decomposition temperature of a polyamide resin constituting the inner layer 5c. Thus, the inner layer 5c is thermally decomposed. On the other hand, the temperature of 360°C is equal to or less than the melting temperature of the polyamide imide resin constituting the outer layer 5d and equal to or less than the thermal decomposition temperature of the polyamide imide resin. Namely, when the conductive wires 5a are heated at the temperature of the soldering, the inner layer 5c of the insulating film 5b is thermally decomposed and a clearance is formed between the outer layer 5d of the insulating film 5b and the conductive wires 5a. In addition, a drying process is performed on the outer layer 5d after the outer layer 5d is applied around the inner layer 5c. Thus, the outer layer 5d is in a stretched state and the residual stress exists in the outer layer 5d in the direction of compressing the outer layer 5d. When the outer layer 5d of the insulating film 5b is not tightly contact with the conductive wires 5a at the end portion of the cord-shaped heater 10, the insulating film 5b is contracted when it is heated. Accordingly, the end portion of the conductive wires 5a is necessarily exposed. As described above, since the end portion of the conductive wires 5a is necessarily exposed, it is not necessary to polish the end portion of the conductive wires 5a for removing the insulating film 5b. The workability of the end portion of the conductive wires 5a is increased significantly. The cord-shaped heater 10 is connected to a not illustrated electric system of the vehicle via the connector 35.

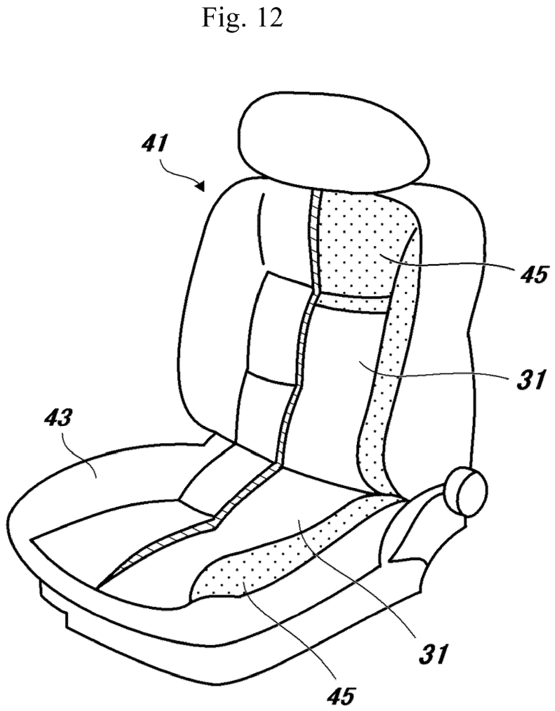

The sheet-shaped heater 31 is arranged in a state of being embedded in a vehicle seat 41 as shown in Fig. 12. Namely, the sheet-shaped heater 31 is adhered to a skin cover 43 or a seat pad 45 of the vehicle seat 41 as described above.

Note that the present invention is not limited to the above described embodiment. First of all, various conventionally known cord-shaped heaters can be used as the cord-shaped heater 10.

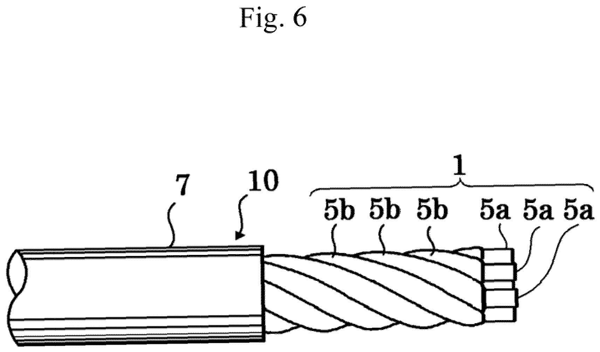

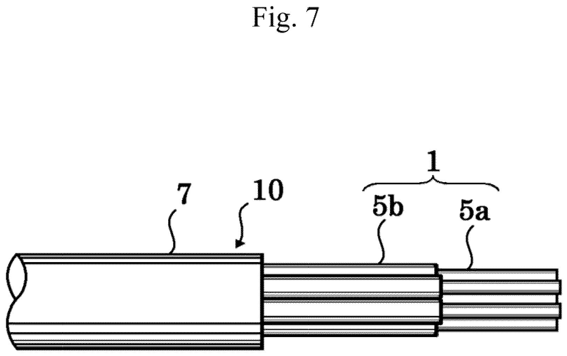

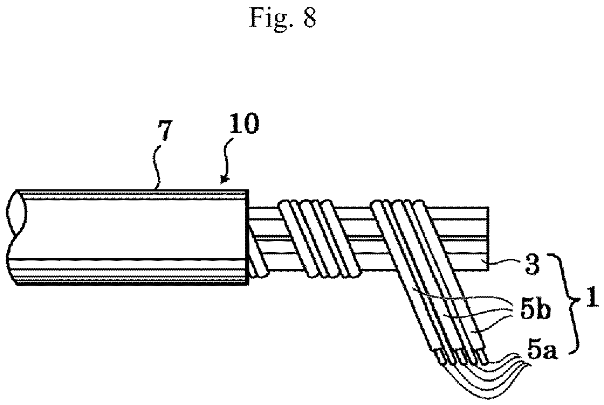

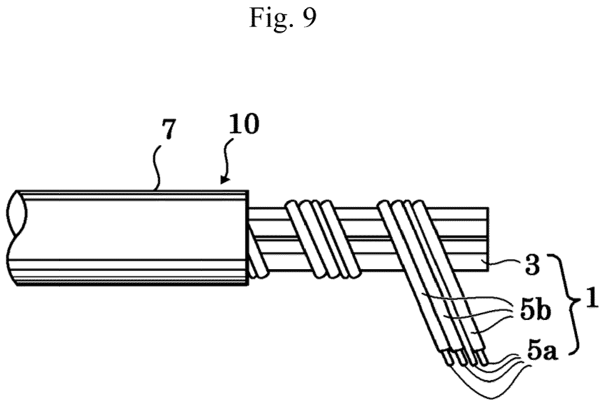

The heating wire 1 can have the following configurations, for example.
1. As shown in the above described embodiment shown in Fig. 1, the heating wire 1 is formed by twisting or arraying the conductive wires 5a covered with the insulating film 5b together, winding the conductive wires 5a around the core wire 3, and covering an insulating coating 7 around them.
2. As shown in Fig. 6, the heating wire 1 is formed by twisting the conductive wires 5a covered with the insulating film 5b.
3. As shown in Fig. 7, the heating wire 1 is formed by arraying the conductive wires 5a covered with the insulating film 5b.
   The heating wire 1 can have the other configurations than the above described configurations.
4. As shown in Fig. 8, the heating wire 1 is formed by alternatively arranging the conductive wires 5a covered with the insulating film 5b and the conductive wires 5a not covered with the insulating film 5b.
5. As shown in Fig. 9, the heating wire 1 is formed by arraying and arranging the conductive wires 5a covered with the insulating film 5b in a state that the number of the conductive wires 5a covered with the insulating film 5b is increased compared to the configuration shown in Fig. 8.

Various configurations of the heating wire 1 can be assumed in addition to the above described configurations. In addition, the heating wire 1 can be also formed by twisting the core wire 3 and the conductive wires 5a together.

Regarding the core wire 3, as an example, a fiber formed by covering a thermoplastic polymer material around a core material described below can be used. The core material can be a monofilament, a multifilament or a spun of inorganic fibers such as a glass fiber or organic fibers such as a polyester fiber (e.g. polyethylene terephthalate), an aliphatic polyamide fiber, an aromatic polyamide fiber and a wholly aromatic polyester fiber. The core material can also be a fiber material of the above described fibers or an organic polymer material constituting the fiber material. When the core wire 3 having a heat-shrinkable property and a heat-melting property is used, even if the conductive wires 5a are disconnected and abnormally heated, the core wire 3 is melted, cut and simultaneously shrunk. When the core wire 3 is shrunk (contracted), the conductive wires 5a wound around the core wire 3 deforms in accordance with the motion of the core wire 3. Thus, the end portions of the disconnected conductive wires 5a are separated from each other. Accordingly, the end portions of the disconnected conductive wires 5a are prevented from being repeatedly contacted and separated with each other. In addition, the end portions of the disconnected conductive wires 5a are prevented from being contacted by a small contact area such as a point contact. Thus, the overheating can be prevented. When the conductive wires 5a are insulated by the insulating film 5b, there is no need to form the core wire 3 by the insulating material. For example, a stainless steel wire or a titanium alloy wire can be used for the core wire 3. However, the core wire 3 is preferably formed by the insulating material since there is a possibility that the conductive wires 5a are disconnected.

Regarding the conductive wires 5a, conventionally known materials can be used. For example, a copper wire, a copper alloy wire, a nickel wire, an iron wire, an aluminum wire, a nickel-chromium alloy wire and an iron-chromium alloy wire can be used. As the copper alloy wire, for example, a tin-copper alloy wire, copper-nickel alloy wire, and a silver containing copper alloy wire can be used. In the silver containing copper alloy wire, copper solid solution and silver-copper eutectic alloy are in a fiber shape. From the above listed materials, the copper wire and the copper alloy wire are preferred to be used in the viewpoint of a balance between the cost and characteristics. Regarding the copper wire and the copper alloy wire, although both soft and hard materials exist, the hard material is particularly preferable than the soft material in the viewpoint of bending resistance. Note that the hard copper wire and the hard copper alloy wire are made by stretching individual metal crystal grains long in a machining direction by cold working such as drawing processing to form a fibrous structure. When the above described hard copper wire and hard copper alloy wire are heated at a recrystallization temperature or higher, processing strains generated in the metal crystal are removed and crystal nuclei begin to appear to serve as a base of new metal crystal. The crystal nuclei are developed, then recrystallization, which is a process of replacing old crystal grains with new metal crystal grains, occurs sequentially, and then the crystal grains are developed. The soft copper wire and the soft copper alloy wire are materials containing such crystal grains in a developed state. The soft copper wire and the soft copper alloy wire have higher stretchability and higher electric resistance but have lower tensile strength compared to the hard copper wire and the hard copper alloy wire. Therefore, the bending resistance of the soft copper wire and the soft copper alloy wire is lower than that of the hard copper wire and the hard copper alloy wire. As explained above, the hard copper wire and the hard copper alloy wire are changed to the soft copper wire and the soft copper alloy wire having lower bending resistance by heat treatment. Therefore, the heat history is preferred to be as less as possible when processing. Note that the hard copper wire is also defined in JIS-C3101 (1994) and the soft copper wire is also defined in JIS-C3102 (1984). In the definition, the soft copper wire is defined to have 15% or more growth in the outer diameter of 0.10 to 0.26 mm, 20% or more growth in the outer diameter of 0.29 to 0.70 mm, 25% or more growth in the outer diameter of 0.80 to 1.8 mm, and 30% or more growth in the outer diameter of 2.0 to 7.0 mm. In addition, the copper wire includes wires to which tin-plating is applied. The tin-plated hard copper wire is defined in JIS-C3151 (1994), and the tin-plated soft copper wire is defined in JIS-C3152 (1984). Furthermore, various shapes can be used as a cross sectional shape of the conductive wires 5a. Without being limited to wires having a circular cross section, although they are ordinary used, so-called a rectangular wire can be also used.

However, when the conductive wires 5a are wound around the core wire 3, the material of conductive wires 5a is preferred to be selected from the above described materials of the conductive wires 5a so that an amount of spring-back is suppressed and a recovery rate is 200% or less. For example, when the silver containing copper alloy in which fiber shaped copper solid solution and silver-copper eutectic alloy are included is used, although tensile strength and bending resistance are excellent, spring-back is easily caused when it is wound. Therefore, the silver containing copper alloy is not preferred because the conductive wires 5a are easily floated when the conductive wires 5a are wound around the core wire 3 and the conductive wires 5a are easily broken when excessive winding tension force is applied. In addition, winding habit is easily formed after the winding process. In particular, when the insulating film 5b is coated on the conductive wires 5a, the recovery rate of the insulating film 5b is also added. Therefore, it is important that conductive wires 5a having low recovery rate are selected so as to compensate the recovery force of the insulating film 5b.

Here, the measurement of the recovery rate defined in the present invention will be described in detail.

At first, while a predetermined load is applied to the conductive wires, the conductive wires are wound more than three times around a cylinder-shaped mandrel having a diameter of 60 times larger than a diameter of the conductive wires so that the conductive wires are not overlapped with each other.

After 10 minutes have passed, the load is removed, the conductive wires are removed from the mandrel, an inner diameter of the shape restored by elasticity is measured, and a rate of the spring-back of the conductive wires is calculated by the following formula (I) so that the calculated rate is evaluated as the recovery rate.$R = \left(d2/d1\right) \times 100$ (I)

### Explanation of symbols:

R: recovery rate (%)
d1: diameter of mandrel used for winding test (mm)
d2: inner diameter of shape restored by releasing load after conductive wires are wound around mandrel (mm)

The insulating film 5b covered around the conductive wires 5a can be formed by two layers of the inner layer 5c and the outer layer 5d as shown in the above described embodiment or can be formed by a plurality of layers having three or more layers. However, it is necessary that the thermal decomposition temperature of the material constituting the inner layer is lower than the melting temperature of the material constituting the outer layer and lower than the thermal decomposition temperature of the material constituting the outer layer. Here, the inner layer is the layer formed on the conductive wires 5a. In addition, it is enough if the outer layer is formed outer than the inner layer. Thus, it is possible to form another outer layer on the outer side of the outer layer or to form another intermediate layer between the inner layer and the outer layer.

Regarding the material of the insulating film 5b, various materials such as a polyurethane resin, a polyamide resin, a polyimide resin, a polyamide imide resin, a polyester imide resin, a nylon resin, a polyester-nylon resin, a polyethylene resin, a polystyrene resin, a polypropylene resin, a polyester resin, a polybenzimidazole resin, a vinyl chloride resin, a fluorine resin and a silicone resin can be listed. The above described materials can be used by combining a plurality kinds of materials and various conventionally known additives such as a flame retardant material and an antioxidant can be added. The materials are combined from the above described resins so that the thermal decomposition temperature of the material constituting the inner layer is lower than the melting temperature of the material constituting the outer layer and lower than the thermal decomposition temperature of the material constituting the outer layer. Regarding the material of the inner layer, a polyurethane resin, a vinyl chloride resin, a polyacetal resin, a polystyrene resin, a polypropylene resin, a polymethyl methacrylate and a polyester resin such as a polyethylene terephthalate can be selected. In particular, it is preferable that the material constituting the inner layer is a thermosetting resin and the material constituting the outer layer is a thermosetting resin. Here, the thermosetting resin includes crosslinkable materials. From the viewpoint of the heating characteristic of the cord-shaped heater and the easiness of the workability of soldering the end portions and the like, it is preferable that the material of the inner layer is a polyurethane resin or a polyester resin and the material of the outer layer is a polyimide resin, a polyamide imide resin or a silicone resin. In particular, it is preferable that the material of the inner layer is the polyurethane resin and the material of the outer layer is a polyamide imide resin. The polyurethane resin can be, for example, an imide-containing polyurethane and other modified or blended materials.

In the present invention, the inner layer thermally decomposes at the temperature equal to or less than the temperature where the outer layer melts or thermally decomposes. Therefore, when the end portion of the conductive wires covered with the insulating film is heated to the temperature equal to or higher than the thermal decomposition temperature of the inner layer and equal to or lower than the melting temperature of the outer layer and equal to or lower than the thermal decomposition temperature of the outer layer, only the inner layer is thermally decomposed. Thus, a clearance is formed between the conductive wires and the insulating film. On the other hand, when the outer layer is formed by extrusion or laterally winding tape, the outer layer is formed in a state of being stretched in a length direction. In addition, when the outer layer is formed by a coating and curing process, the contraction force is generated on the outer layer when the outer layer is cured. Namely, the residual stress exists in the outer layer in the direction of compressing the outer layer in the length direction. When the inner layer of the conductive wires covered with the insulating film is thermally decomposed, a clearance is formed between the insulating film and the conductive wires. When the heat is further added, the outer layer of the insulating film is contracted. By the above described operation, for example, the end portion of the conductive wires covered with the insulating film are heated to a predetermined temperature such as a solder-melting temperature and the insulating film is removed and the conductive wires can be exposed. Because of this, the workability of the terminal can be increased.

In addition, the reason for increasing the workability of the terminal can be explained as follows. The conductive wires thermally expand when the solder or the like is contacted the conductive wires and the conductive wires are heated. The thermal expansion coefficient of the insulating film mainly formed by resin material and rubber material is larger than that of the conductive wire ordinarily formed by metal materials such as a copper wire, a copper alloy wire and a nickel wire. Therefore, the insulating film thermally expands since the thermal expansion coefficient of the insulating film is larger than that of the conductive wires. Thus, the force separating the insulating film from the conductive wires is applied and cracks occur in the insulating film. The solder or the like enters in the clacks of the insulating film and accelerates the thermal decomposition of the inner layer of the insulating film. In addition, decomposing gas is generated when the inner layer decomposes. The decomposing gas presses and peels the outer layer from the conductive wires. Based on the above described consideration, the material of the insulating film preferably has large thermal expansion coefficient. If the temperature of thermally decomposing the material of the inner layer is equal to or lower than the glass transition point of the material constituting the outer layer, the outer layer is not transitioned to the rubber state and cracks easily occur in the outer layer.

In addition, another reason for increasing the workability of the terminal can be explained as follows. When the insulating film is in contact with the solder or the like and heated by the solder or the like, the inner layer of the insulating film is thermally decomposed. When the decomposing gas generated when the inner layer decomposes is the reducing gas such as hydrogen, carbon monoxide, aldehyde and low-molecular-weight alkane, the oxide layer of the surface of the conductive wires is reduced by the reducing gas. When the oxide layer of the surface of the conductive wires is reduced, wettability to the solder or the like is enhanced. When the wettability of the surface of the conductive wires is enhanced, the solder or the like is easily entered between the conductive wires and the insulating film, the thermal decomposition of the inner layer and the separation of the insulating film are enhanced, and the solder or the like and the conductive wires are more surely adhered to each other. The urethane resin used as the material of the inner layer 5c in the above described embodiment generates the reducing gas during the thermal decomposition. It is also possible to blend the material generating the reducing gas during the thermal decomposition with various resins and rubbers and use the blended material as the material constituting the inner layer 5c.

The above described reason is merely guessed by the inventor of the present invention. Thus, the above described reason does not affect and restrict the present invention and claims.

When winding the above described conductive wires 5a around a core material 3, it is more preferable to array the conductive wires 5a than to twist the conductive wire s 5a. This is because the diameter of a heating core 4 becomes smaller and a surface becomes smoother. In addition to the method of arraying and twisting, it is also possible to braid the conductive wires 5a around the core material 3.

The insulation body layer 7 can be formed by the extrusion molding or the like or the insulator layer 7 preliminary formed in a tubular shape can be used. The method of forming the insulation body layer 7 is not particularly limited. When the insulator layer 7 is formed by the extrusion molding, the position of the conductive wires 5a is fixed. Thus, the positional misalignment hardly occurs between the insulation body layer 7 and the conductive wires 5a. As a result, friction and bending of the conductive wires 5a is prevented and the bending resistance is improved. Therefore, the extrusion molding is preferred. The material of the insulation layer 7 can be arbitrarily specified according to usage pattern and usage environment of the cord-shaped heater. For example, various resins such as a polyolefin-based resin, a polyester-based resin, a polyurethane-based resin, an aromatic polyamide-based resin, an aliphatic polyamide-based resin, a vinyl chloride resin, a modified-Noryl resin (polyphenylene oxide resin), a nylon resin, a polystyrene resin, a fluororesin, a synthetic rubber, a fluororubber, an ethylene-based thermoplastic elastomer, an urethane-based thermoplastic elastomer, a styrene-based thermoplastic elastomer, a polyester-based thermoplastic elastomer and a polyamide-based thermoplastic elastomer can be listed. In particular, a polymer composition having flame retardancy is preferably used. Here, the polymer composition having flame retardancy means the polymer composition having an oxygen index of 21 or more in the flame retardant test defined in JIS-K7201 (1999). The polymer composition having the oxygen index of 26 or more is especially preferred. In order to obtain the above described flame retardancy, a flame retardant material or other material can be arbitrarily added to the material forming the above described insulator layer 7. Regarding the flame retardant material, metal hydrates such as a magnesium hydroxide and an aluminum hydroxide, an antimony oxide, a melamine compound, a phosphorus compound, a chlorine-based flame retardant, and a bromine-based flame retardant can be listed, for example. A surface treatment can be arbitrarily applied to the above described flame retardant materials by a conventionally known method.

When the insulation body layer 7 is formed by the heat-fusing material, the cord-shaped heater 10 can be heat-fused with the substrate 11 by heating and pressing. In such a case, an olefin-based resin is preferred in the above listed materials because the olefin-based resin is excellent in adhesion to the substrate. Regarding the olefin-based resin, a high density polyethylene, a low density polyethylene, an ultra-low density polyethylene, a linear low density polyethylene, a polypropylene, a polybutene, an ethylene-α-olefin copolymer, and an ethylene-unsaturated ester copolymer can be listed, for example. Regarding the ethylene-unsaturated ester copolymer, an ethylene-vinyl acetate copolymer, an ethylene-(meth) acrylic acid methyl copolymer, an ethylene-(meth) acrylic acid ethyl copolymer, and an ethylene-(meth) acrylic acid butyl copolymer can be listed, for example. The above listed materials can be used independently or two or more kinds can be mixed. Here, "(meth) acrylic acid" means both acrylic acid and methacrylic acid. The material can be arbitrarily selected from the above listed materials. However, the material melted at a temperature equal to or lower than a kick-off temperature or a melting temperature of the above described material forming the insulating film 5b is preferred. In addition, regarding the material excellent in adhesion to the substrate 11, a polyester-based thermoplastic elastomer is exemplified. Regarding the polyester-based thermoplastic elastomer, there are both a polyester-polyester type and a polyester-polyether type. However, the polyester-polyether type is preferred because the adhesiveness is higher. Note that the adhesion strength between the cord-shaped heater 10 and the substrate 11 is very important when the cord-shaped heater 10 and the substrate 11 are heat-fused together. If the adhesion strength is not enough, the cord-shaped heater 10 and the substrate 11 are peeled off from each other during repeated use. Because of this, unexpected bending is applied to the cord-shaped heater 10. Thus, possibility of the disconnection fault of the conductive wires 5a increases. If the conductive wires 5a are disconnected, a role of the heater is lost, and also a spark may be generated by chattering. When the operating temperature of the cord-shaped heater 10 is high, it is preferable to use a polyamide-based thermoplastic elastomer. Of course, a plurality of the above described materials of the insulation body layer 7 can be combined and various conventionally known additives such as a flame retardant material and an antioxidant can be added.

It is also possible to form a plurality of insulation body layers 7 without limited to one layer. For example, it is possible that a layer of a fluororesin is formed around the conductive wires 5a and a layer of a polyethylene resin is formed around the layer of the fluororesin as the heat-fusing material so that the insulation body layer 7 is formed by the above described two layers. Of course, it is also possible to form three or more layers. In addition, the insulation body layer 7 is not necessarily formed continuously in a length direction. For example, the insulation body layer 7 can be formed linearly or spirally along the length direction of the cord-shaped heater 10, formed in a dot pattern, or formed intermittently. Here, it is preferable that the heat-fusing material is not continuously formed in the length direction of the cord-shaped heater since the burning area is not enlarged even if a part of the heat-fusing material is ignited. Furthermore, when the area of the heat-fusing material is small enough, the fire goes out and burning dripping does not occur since the combustible material suddenly disappears even if the heat-fusing material is formed by the combustible material. Accordingly, the area of the heat-fusing material is preferably as small as possible within the range of keeping the adhesiveness to the substrate 11.

When a bending-resistance test, which is performed by repeatedly bending in an angle of 90° with a radius of curvature of 6 times of the self-diameter, is performed for the cord-shaped heater 10 obtained above, the number of bending until the break of at least one of the conductive wires is preferably 20,000 times or more.

When the terminal of the cord-shaped heater 10 is processed, the soldering can be performed as shown in the above described embodiment but other methods can be also used. For example, even when a heat source having a predetermined temperature is approached to the end portion at which the heating wire 1 is exposed or hot air having a predetermined temperature is blown, the inner layer 5c is thermally decomposed and the insulating film 5b (outer layer 5d) is contracted to expose the end portion of the conductive wires 5a. Note that the predetermined temperature here means the temperature equal to or higher than the thermal decomposition temperature of the inner layer 5c.

Regarding the substrate 11, in addition to the nonwoven fabric shown in the above described embodiment, various materials such as a woven fabric, a paper, an aluminum foil, a mica plate, a resin sheet, a foamed resin sheet, a rubber sheet, a foamed rubber sheet and a stretched porous material can be used, for example. However, it is preferable to use the material having the flame retardancy satisfying the requirements of the combustion test of the automobile interior material of FMVSS No. 302. Here, FMVSS is Federal Motor Vehicle and the combustion test of the automobile interior material is defined as No. 302 of FMVSS. In the above described materials, the nonwoven fabric is especially preferred to be used for the car seat heater because the nonwoven fabric has a good touch feeling and is soft. When the nonwoven fabric is used, the fiber having the core-sheath structure is used as the heat-fusing fiber constituting the nonwoven fabric where the low-melting polyester is used as the sheath component in the above described embodiment. Other than this, a low-melting polypropylene or a polyethylene can be used as the sheath component in the core-sheath structure of the fiber, for example. By using the above described heat-fusing fiber, a sheath portion of the heat-fusing fiber and the heat-fusing material are fused together and integrated in a state of surrounding a core portion of the heat-fusing fiber. Thus, the adhesion between the cord-shaped heater 10 and the nonwoven fabric becomes very strong. Regarding the flame retardant fiber, in addition to the above described flame retardant polyester, various flame retardant fibers can be used. Here, the flame retardant fiber means the fiber satisfying the requirements JIS-L1091 (1999). When the above described flame retardant fiber is used, an excellent flame retardancy is applied to the substrate.

A mixture ratio of the heat-fusing fiber is preferably 5% or more and 20% or less. If the mixture ratio of the heat-fusing fiber is less than 5%, the adhesiveness is insufficient. If the mixture ratio of the heat-fusing fiber exceeds 20%, the nonwoven fiber becomes hard. That causes a feeling of strangeness to a seated person, and reduces the adhesiveness to the cord-shaped heater instead. Furthermore, the substrate is shrunk by the heat of the heat-fusion, and dimensions intended in the product design may not be obtained. The mixture ratio of the flame retardant fiber is 70% or more, and is preferably 70% or more and 95% or less. If the mixture ratio of the flame retardant fiber is less than 70%, the flame retardancy is insufficient. If the mixture ratio of the flame retardant fiber exceeds 95%, the mixture ratio of the heat-fusing fiber is relatively insufficient and the adhesiveness is insufficient. Note that a sum of the mixture ratio of the heat-fusing fiber and the mixture ratio of the flame retardant fiber is not necessarily 100%. Other fibers can be arbitrarily mixed. Even if the heat-fusing fiber is not mixed, sufficient adhesiveness can be obtained by, for example, using similar types of materials both for the material of the heat-fused portion and the material of the fiber forming the substrate. Therefore, it can be reasonably assumed that the heat-fusing fiber is not mixed.

A size, a thickness and other conditions of the nonwoven fabric are arbitrarily changed according to the usage. However, the thickness (a value measured in a dried condition) is preferably approximately 0.6 mm to 1.4 mm. By using the nonwoven fabric having the above described thickness, when the cord-shaped heater and the nonwoven fabric are adhered and fixed with each other by heating and pressing, the nonwoven fabric adheres with 30% or more, preferably 50% or more, of the outer periphery of the cord-shaped heater. Thus, the adhesion can be strong.

It is preferred that the substrate 11 includes gaps. It is particularly preferred that more gaps are provided in a surface (hereafter, referred to as an arrangement surface) on which the cord-shaped heater is arranged than another surface (hereafter, referred to as a non-arrangement surface) on which the cord-shaped heater is not arranged. For example, in cloth materials such as a woven fabric and a nonwoven fabric, a state of having many gaps means a state of having a small unit weight, i.e. fiber weight per unit volume. In porous bodies such as a foamed resin sheet and a foamed rubber sheet, a state of having many gaps means a state of having a large porosity. Regarding the specific aspect of the substrate of the present invention, a woven fabric or a nonwoven fabric formed by carrying out calendar processing on one side or both sides so that different strength are applied on each side by adjusting a temperature and a pressure, a nonwoven fabric formed by carrying out needle punching only from one side, a cloth body on which piles or raising are formed on one side, a foamed resin sheet or a foamed rubber sheet formed so that a porosity is gradually changed in a thickness direction, or materials formed by sticking materials having different porosities together can be listed, for example. In particular, the porosities of the substrate are preferably continued. This is because the melted heat fusion layer penetrates in the continued porosities. Thus, anchor effect is increased and adhesive strength is improved. Regarding the state of continuing the porosities, cloth materials, i.e. fiber aggregate, such as a woven fabric and a nonwoven fabric, and a foamed resin sheet or a foamed rubber sheet having continuous pores can be considered. Note that the non-arrangement surface can be formed not to have the porosities.

When the cord-shaped heater 10 is arranged on the substrate 11, in addition to the embodiment of adhering and fixing by the fusion of heating and pressing, the cord-shaped heater 10 can be fixed on the substrate 11 by using other methods. For example, various embodiments such as an embodiment of adhering and fixing the cord-shaped heater 10 with the substrate 11 by heating the insulation body layer 7 made of the heat-fusing material and melting the insulation body layer 7 by hot air, an embodiment of adhering and fixing the cord-shaped heater 10 with the substrate 11 by melting the insulation body layer 7 made of the heat-fusing material by a heat generated by passing an electric current to the conductive wires 5a, and an embodiment of sandwiching and fixing the cord-shaped heater 10 by a pair of substrates 11 while heating can be considered.

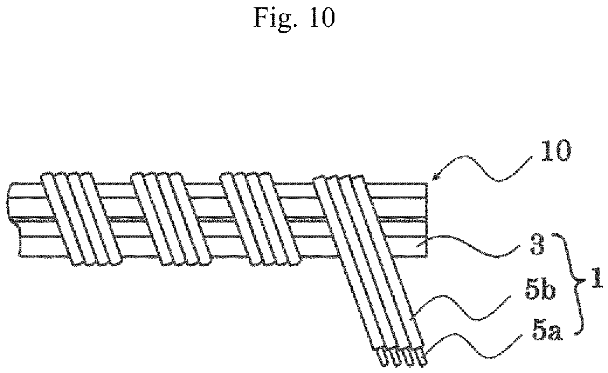

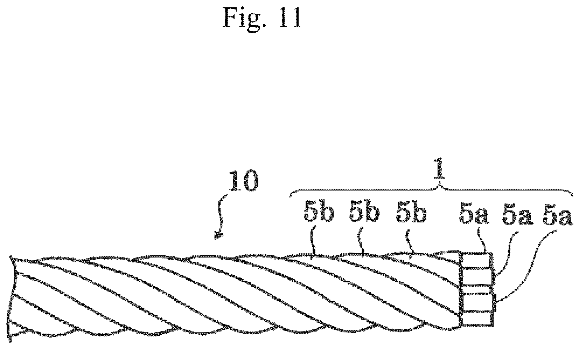

In addition, an embodiment not using the heat-fusing material can be also considered. For example, it is possible to arrange the cord-shaped heater 10 on the substrate 11 by sewing or to sandwich and fix the cord-shaped heater 10 by a pair of substrates 11. In such a case, it is possible not to form the insulation body layer 7 as shown in Fig. 10 and Fig. 11.

Regarding the adhesive layer for fixing the sheet-shaped heater 31 to a seat, from a viewpoint of the stretchability of the substrate 11 and good touch feeling, it is preferred that the adhesive layer only made of an adhesive material is formed on a release sheet or the like and then transferring the adhesive layer from the release sheet to a surface of the substrate 11. The adhesive layer preferably has flame retardancy satisfying the requirements of the combustion test of the automobile interior material of FMVSS No. 302 when the adhesive layer is independently used. For example, an acrylic polymer adhesive material can be listed. The adhesive layer can be formed on the arrangement surface of the substrate although it can be formed on the non-arrangement surface.

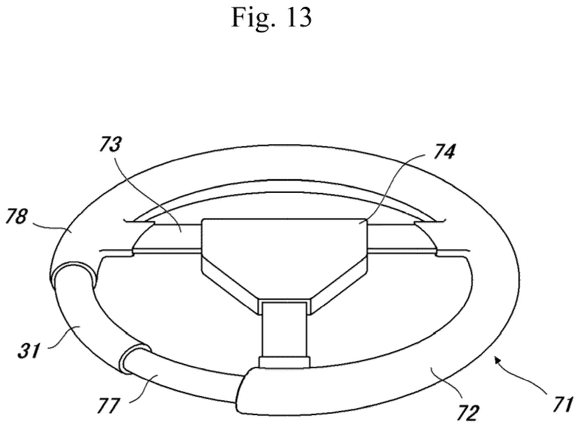

The sheet-shaped heater 31 configured as described above can be installed on a steering wheel 71 in a state shown in Fig. 13. The steering wheel 71 is formed by a wheel portion 72, a spoke portion 73 and a boss portion 74. The sheet-shaped heater 31 is installed between a wheel core material 77 and a covering material 78 of the wheel portion 72.

### [Examples]

The workability test (confirming continuity to connection terminal) and the flammability test (horizontal flame retardant test) were carried out on the cord-shaped heater 10 (shown in Fig. 1) obtained in the above described embodiment as Example 1.

The workability test was performed by confirming the continuity after the terminal is processed. First, the cord-shaped heater 10 was cut so that an effective length of the conductive wires 5a was 90 mm and a strip process was performed on the end portion with the length of 8 mm. In addition, the lead wire was cut so that an effective length of the conductive material (φ1.73 mm) was 90 mm and a strip process was performed on the end portion with the length of 8 mm. The cord-shaped heater 10 and the lead wire were arranged in a arrayed state and a connection terminal (commercially available splice terminal) was set to the end portion and the soldering was performed using a flux-containing solder (melting temperature 340°C) to connect the cord-shaped heater 10 and the lead wire with each other. Then, a resistance value between the cord-shaped heater 10 and the lead wire was measured. The number of samples was 20 and an average value was calculated. (The average value was calculated excluding the sample having unmeasurable high resistance value.) The sample was judged as acceptable when the average value was less than 1Ω and there was no unmeasurable sample, while the sample was judged as unacceptable when the average value was equal to or higher than 1Ω or there was an unmeasurable sample. The result is shown in Table 1 where the acceptable sample is shown as "∘" while the unacceptable sample is shown as "×."

The flammability test was performed in accordance with UL1581 Flame retardance Horizontal test) (2008, 4th edition) to measure the extent of combustion (width affected by flame). The sample was judged as acceptable when the extent of combustion was 30 mm or less. In particular, the sample was judged as excellent when the extent of combustion was 25 mm or less while the sample was judged as acceptable when the extent of combustion exceeded 25 mm and equal to or less than 30 mm. The sample was judged as unacceptable when the extent of combustion exceeded 30 mm. The result is shown in Table 1 where the excellent sample is shown as a double circle, the acceptable sample is shown as "∘" and the unacceptable sample is shown as "×."

In Example 2 and the Comparative Examples 1 to 3, the material constituting the insulating film 5b is changed from the cord-shaped heater 10 of the example 1 (the above described embodiment). Example 2 is a sample where the inner layer 5c of the insulating film 5b is formed of imide-containing urethane resin. Comparative Example 1 is a sample where the insulating film 5b is formed by a single layer of the polyamide imide resin. Comparative Example 2 is a sample where the insulating film 5b is formed by a single layer of the polyurethane resin. Comparative Example 3 is a sample where the inner layer 5c of the insulating film 5b is formed of imide-containing urethane resin and the outer layer 5d is formed of acrylic resin. The tests were performed also for these examples similar to Example 1.
The test result is also shown in Table 1.

**[Table 1]**

| | Example 1 | Example 2 | Comparative Example 1 | Comparative Example 2 | Comparative Example 3 |
|---|---|---|---|---|---|
| inner layer of insulation film | urethane | imide-containing urethane | - | urethane | imide-containing urethane |
| outer layer of insulation film | polyamide imide | polyamide imide | polyamide imide | - | acryl |
| workability | ○ | ○ | × | ○ | × |
| flammability | ○ | ⊚ | ⊚ | × | × |

In the cord-shaped heaters of Example 1 and Example 2, the thermal decomposition temperature of the material constituting the inner layer is lower than the melting temperature of the material constituting the outer layer and lower than the melting temperature or the thermal decomposition temperature of the material constituting the outer layer. On the other hand, in the cord-shaped heater of Comparative Example 3, the thermal decomposition temperature of the material constituting the inner layer is higher than the melting temperature of the material constituting the outer layer. The thermal decomposition temperature was measured in accordance with JIS-K7120-1997 Testing methods of plastics by thermogravimetry (or ISO7111-1997). In addition, the melting temperature was measured in accordance with JIS-K7121-1987 Testing methods for transition temperatures of plastics.

As shown in Table 1, it was confirmed that the cord-shaped heater 10 of the present embodiment was excellent in the workability of the terminal. The cord-shaped heaters of Comparative Examples 1, 3 were unmeasurable. Namely, the insulating film was not removed at all in more than half samples and the yield of the product was bad. Furthermore, the cord-shaped heater 10 of the present embodiment is also acceptable in the flammability test. In particular, the cord-shaped heater of Example 2 is excellent in the flammability. In the cord-shaped heater of Comparative Examples 2, 3, the extent of combustion was far from the acceptable range. Thus, the flammability was inferior.

Regarding the cord-shaped heater 10 of Example 1, the cord-shaped heater 10 was arranged on the substrate 11 in a linear shape and the cord-shaped heater 10 was fixed on the substrate 11 using the hot press-type heater manufacturing apparatus 13 as described above. The bending-resistance test was also performed on the above described cord-shaped heater 10 adhered and fixed to the substrate 11 similar to the above. In addition, regarding the cord-shaped heater 10 of Example 1, the cord-shaped heater 10 was arranged on the substrate 11 in a linear shape and the cord-shaped heater 10 was fixed on the substrate 11 using an adhesive tape. The bending-resistance test was also performed on the above described cord-shaped heater 10 adhered and fixed to the substrate 11 similar to the above.
In both examples, it was confirmed that the value of the bending resistance was enough and the cord-shaped heater 10 of the present embodiment had enough bending resistance also in a state of being adhered and fixed to the substrate 11.

### [Industrial applicability]

As explained above in detail, the present invention provides the cord-shaped heater enabling to process the terminal easily. The cord-shaped heater can be used as the sheet-shaped heater, for example by being arranged on the substrate such as an aluminum foil, a foamed resin and a nonwoven fabric in a predetermined shape such as a meandering shape. The sheet-shaped heater can be suitably used for an electric blanket, an electric carpet, a car seat heater, a steering heater, a heated toilet seat, an anti-fog mirror heater, an antifreezing heater for cameras and a heating cooker, for example. In addition, as the single use of the cord-shaped heater, the cord-shaped heater can be wound and adhered around a pipe, a tank or the like, or can be installed inside the pipe, for example. Regarding the practical use, the cord-shaped heater can be suitably used as an antifreezing heater for a piping and a pipe drain of a freezer, a heat retaining heater for an air conditioner and a dehumidifier, a defrosting heater for a refrigerator and a freezer, a drying heater and a floor heating heater, for example. The cord-shaped heater of the present invention can be directly adhered to or directly wound around the heating objects in the above listed examples of the usage of the sheet-shaped heater: the electric blanket, the electric carpet, the car seat heater, the steering heater, the heated toilet seat, the anti-fog mirror heater, the heating cooker, and the floor heating heater.

### [Description of the Reference Numerals]

1 heating wire
3 core material
5a conductive wires
5b insulating film
5c inner layer
5d outer layer
7 insulation body layer
10 cord-shaped heater
11 substrate
31 sheet-shaped heater
41 vehicle seat

## Claims

1. A cord-shaped heater (10) including one or a plurality of conductive wires (5a) covered with an insulating film (5b), **characterized in that**
the insulating film (5b) at least includes an inner layer (5c) formed on the conductive wires (5a) and an outer layer (5d) formed outside the inner layer (5c), and
the thermal decomposition temperature of a first material constituting the inner layer (5c) is lower than the melting temperature of a second material constituting the outer layer (5d) and lower than the thermal decomposition temperature of the second material.

2. The cord-shaped heater (10) according to claim 1, wherein
the second material constituting the outer layer (5d) is a thermosetting resin.

3. The cord-shaped heater (10) according to claim 1 or 2, wherein
the first material constituting the inner layer (5c) generates a reducing gas when the first material is thermally decomposed.

4. The cord-shaped heater (10) according to any one of claims 1 to 3, wherein
the first material constituting the inner layer (5c) is selected from the group consisting of a polyurethane resin and a polyester resin, and
the second material constituting the outer layer (5d) is selected from the group consisting of a polyimide resin, a polyamide imide resin and a silicone resin.

5. A sheet-shaped heater (31), **characterized in that**
the cord-shaped heater (10) according to any one of claims 1 to 4 is arranged on a substrate (11).

## Patentansprüche

1. Schnurförmiges Heizelement (10) mit einem oder mehreren leitfähigen Drähten (5a), die mit einem Isolierfilm (5b) ummantelt sind, **dadurch gekennzeichnet, dass**
der Isolierfilm (5b) zumindest eine auf den leitfähigen Drähten (5a) ausgebildete Innenschicht (5c) und eine außerhalb der Innenschicht (5c) ausgebildete Außenschicht (5d) umfasst, und
die thermische Zersetzungstemperatur eines ersten Materials, aus dem die Innenschicht (5c) besteht, niedriger ist als die Schmelztemperatur eines zweiten Materials, aus dem die Außenschicht (5d) besteht, und niedriger als die thermische Zersetzungstemperatur des zweiten Materials.

2. Schnurförmiges Heizelement (10) gemäß Anspruch 1, wobei
das zweite Material, aus dem die Außenschicht (5d) besteht, ein duroplastisches Harz ist.

3. Schnurförmiges Heizelement (10) gemäß Anspruch 1 oder 2, wobei
das erste Material, aus dem die Innenschicht (5c) besteht, ein reduzierendes Gas erzeugt, wenn das erste Material sich thermisch zersetzt.

4. Schnurförmiges Heizelement (10) gemäß einem der Ansprüche 1 bis 3, wobei
das erste Material, das die Innenschicht (5c) bildet, aus der Gruppe ausgewählt ist, die aus einem Polyurethanharz und einem Polyesterharz besteht, und
das zweite Material, das die Außenschicht (5d) bildet, aus der Gruppe ausgewählt ist, die aus einem Polyimidharz, einem Polyamidimidharz und einem Silikonharz besteht.

5. Planares Heizelement (31), **dadurch gekennzeichnet, dass**
das schnurförmige Heizelement (10) gemäß einem der Ansprüche 1 bis 4 auf einem Substrat (11) angeordnet ist.

## Revendications

1. Dispositif de chauffage en forme de cordon (10) incluant un ou une pluralité de fils conducteurs (5a) recouverts d'un film isolant (5b), **caractérisé en ce que**
le film isolant (5b) inclut au moins une couche interne (5c) formée sur les fils conducteurs (5a) et une couche externe (5d) formée à l'extérieur de la couche interne (5c), et
la température de décomposition thermique d'un premier matériau constituant la couche interne (5c) est inférieure à la température de fusion d'un deuxième matériau constituant la couche externe (5d) et inférieure à la température de décomposition thermique du deuxième matériau.

2. Dispositif de chauffage en forme de cordon (10) selon la revendication 1, dans lequel
le deuxième matériau constituant la couche externe (5d) est une résine thermodurcissable.

3. Dispositif de chauffage en forme de cordon (10) selon la revendication 1 ou la revendication 2, dans lequel
le premier matériau constituant la couche interne (5c) génère un gaz réducteur lorsque le premier matériau est décomposé thermiquement.

4. Dispositif de chauffage en forme de cordon (10) selon l'une quelconque des revendications 1 à 3, dans lequel
le premier matériau constituant la couche interne (5c) est sélectionné parmi le groupe consistant en une résine polyuréthane et une résine polyester, et
le deuxième matériau constituant la couche externe (5d) est sélectionné parmi le groupe consistant en une résine polyimide, une résine polyamide imide et une résine silicone.

5. Dispositif de chauffage en forme de feuille (31), **caractérisé en ce que**
le dispositif de chauffage en forme de cordon (10) selon l'une quelconque des revendications 1 à 4 est agencé sur un substrat (11).
